# EUROPÄISCHE PATENTSCHRIFT

(11) **EP 0 961 882 B1**
(45) Veröffentlichungstag und Bekanntmachung des Hinweises auf die Patenterteilung: **10.09.2003**
(21) Anmeldenummer: 98934860.2
(22) Anmeldetag: 05.06.1998
(51) Int. Cl.: F04B 53/16, F04B 1/04

(54) **KOLBENPUMPE**
PISTON PUMP
POMPE A PISTON

(30) Priorität: 30.07.1997 DE 19732792
(43) Veröffentlichungstag der Anmeldung: 08.12.1999
(73) Patentinhaber: ROBERT BOSCH GMBH, 70442 Stuttgart (DE)
(72) Erfinder: MERKLEIN, Dieter, D-87435 Kempten (DE); FRITSCH, Siegfried, D-87527 Sonthofen (DE); ZITZELSBERGER, Ralf, D-87616 Marktoberdorf (DE); WEH, Andreas, D-87471 Durach (DE); HELLEBRANDT, Michael, D-87545 Burgberg (DE)
(86) Internationale Anmeldenummer: DE9801531
(87) Internationale Veröffentlichungsnummer: WO99006705

(56) Entgegenhaltungen:
- EP-A- 0 724 921
- EP-A- 0 761 967
- WO-A-96/28661
- DE-A- 3 742 824
- DE-A- 4 107 979
- DE-A- 4 407 978
- DE-A- 4 431 739
- DE-A- 19 721 227
- US-A- 5 628 625

## Beschreibung

Die Erfindung betrifft eine Kolbenpumpe nach der Gattung des Hauptanspruchs.

Eine derartige Kolbenpumpe ist bekannt aus der DE 41 07 979 A1. Die bekannte Kolbenpumpe weist einen Kolben auf, der mit einem rotierend antreibbaren Exzenter zu einer hin- und hergehenden Hubbewegung antreibbar ist. Der Kolben ist axial verschiebblich in einer Laufbuchse geführt, welche in eine Zylinderbohrung eines Pumpengehäuses eingeschraubt ist. Die Laufbuchse der bekannten Kolbenpumpe ist ein geometrisch kompliziert geformtes und in der Herstellung aufwendiges Drehteil mit einer gestuften, eine Hinterschneidung aufweisenden Innenbohrung, Hinterschneidungen und einem radial überstehenden, mit einem Gewinde zum Einschrauben in die Zylinderbohrung versehenen Bund auf der Außenseite, und mit Querbohrungen als Einlaß und Längsbohrungen für den Eingriff eines Einschraubwerkzeugs.
Eine ähnliche Kolbenpumpe ist auch aus der DE 44 31 739 A bekannt.

### Vorteile der Erfindung

Die erfindungsgemäße Kolbenpumpe mit den Merkmalen des Hauptanspruchs weist eine durch einen Umformvorgang, vorzugsweise eine Kaltumformung. beispielsweise durch Kaltschlagen hergestellte Laufbuchse auf. Die Erfindung hat den Vorteil, daß die Laufbuchse in einem oder wenigen Arbeitsschritten schnell und preisgünstig herstellbar ist. Weiterer Vorteil ist das vereinfachte Einsetzen der Laufbuchse in die Zylinderbohrung des Pumpengehäuses.

Die Unteransprüche haben vorteilhafte Ausgestaltungen und Weiterbildungen der im Hauptanspruch angegebenen Erfindung zum Gegenstand.

Eine Preßpassung bewirkt eine Abdichtung zwischen Laufbuchse und Zylinderbohrung, wodurch sich separate Dichtmittel wie Dichtringe erübrigen.

Gemäß Anspruch 4 weist die Laufbuchse der erfindungsgemäßen Kolbenpumpe einen mit ihr einstückigen Boden auf, was der Laufbuchse eine größere Stabilität gibt, die eine Festigkeit der Laufbuchse gegen Verformung insbesondere beim Einpressen in das Pumpengehäuse bzw. beim Aufpressen eines Verschlußteils erhöht.

Vorzugsweise ist der Boden der Laufbuchse gemäß Anspruch 5 mit einem Durchgangsloch und einem Ventilsitz für ein Ein- oder Auslaßventil der Kolbenpumpe an einer Mündung des Durchgangsloches versehen. Durchgangsloch und Ventilsitz lassen sich auf diese Weise vorteilhaft in einem Arbeitsgang mit dem Herstellen der Laufbuchse durch Umformen fertigen. Weiterer Vorteil dieser Ausgestaltung der Erfindung ist die Einsparung eines separaten Ventilsitzträgerteils und eine kompakte, in axialer Richtung kurzbauende Kolbenpumpe.

Bei einer Kolbenpumpe nach Anspruch 6 ist ein Verschlußteil, welches die Zylinderbohrung auf Seite eines Verdrängungsraums druckdicht verschließt, fest beispielsweise durch Einpressen der Laufbuchse in das Verschlußteil mit der Laufbuchse verbunden und durch eine Verstemmung druckdicht im Pumpengehäuse befestigt. Das Verschlußteil ist auf einfache Weise und schnell ebenso wie die Laufbuchse als Umformteil herstellbar. Das Verstemmen des Verschlußteils im Gehäuse ermöglicht einen radialen Versatzausgleich, um eine Überbestimmung der Anbringung der Laufbuchse mit dem fest an ihr fixierten Verschlußteil in der Zylinderbohrung des Pumpengehäuses zu vermeiden. Hinzu kommt, im Vergleich zum Stand der Technik wie beispielsweise DE-A-41 07 979, der Vorteil der Einsparung eines Dichtrings oder dgl. zwischen Verschlußteil und Laufbuchse aufgrund der Abdichtung durch die Presspassung zwischen diesen beiden Teilen.

Ein Durchströmkanal insbesondere als Pumpenauslaß ist gemäß Anspruch 9 durch eine von innen nach außen verlaufende Nut verwirklicht, welche in einander zugewandten Flächen des Verschlußteils bzw. der Laufbuchse angebracht ist. Dies hat den Vorteil, daß die zur Laufbuchse bzw. zum Verschlußteil hin offene Nut im Verschlußteil bzw. in der Laufbuchse, die bei auf die Laufbuchse aufgepreßtem Verschlußteil von der Laufbuchse/einem Boden der Laufbuchse bzw. vom Verschlußteil zu einem Durchströmkanal abgedeckt wird, in einem Arbeitsgang mit der Herstellung des Verschlußteils bzw. der Laufbuchse durch Umformen gefertigt werden kann.

Die Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylidner oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenen Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

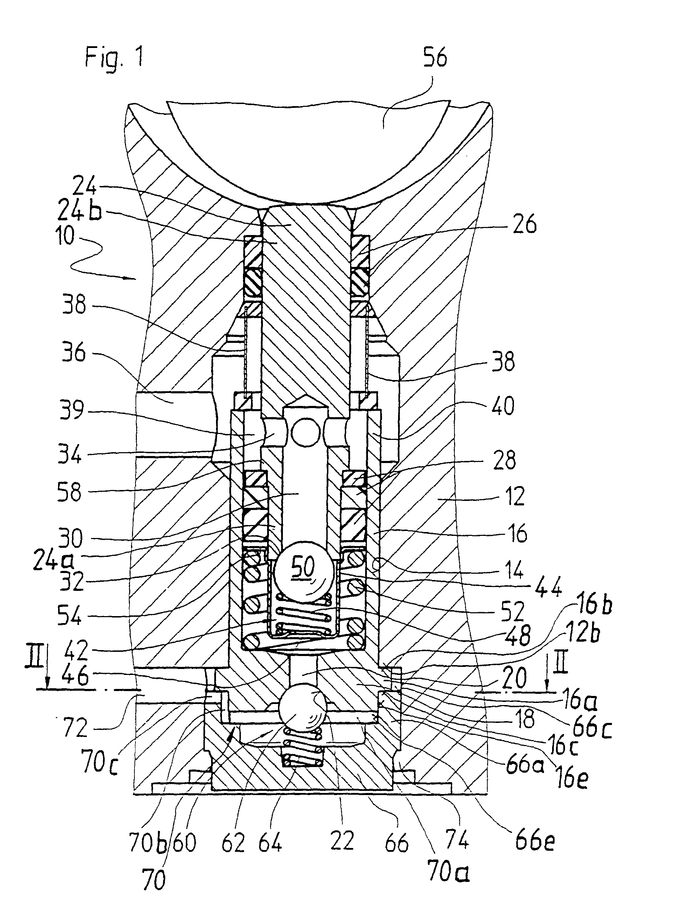

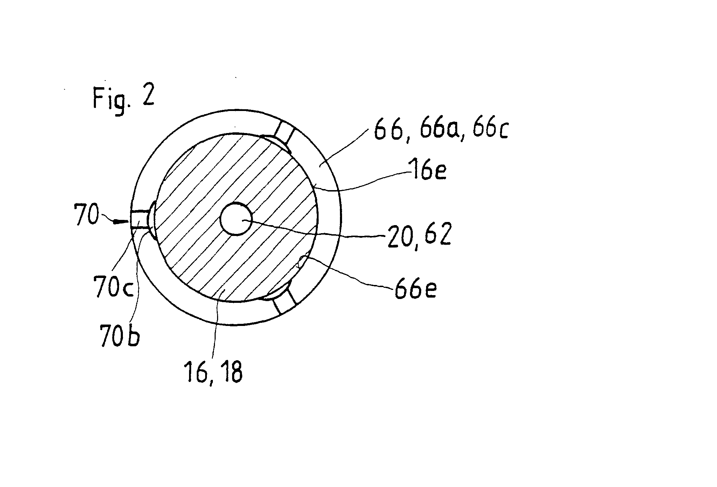

Die Erfindung wird nachfolgend anhand eines in der Zeichnung dargestellten Ausführungsbeispiels näher erläutert. Es zeigen Figur 1 einen Achsschnitt einer erfindungsgemäßen Kolbenpumpe, und Figur 2 einen Radialschnitt entlang Linie II-II in Figur 1.

### Beschreibung des Auführungsbeispiels

Die in der Zeichnung dargestellte, insgesamt mit 10 bezeichnete, erfindungsgemäße Kolbenpumpe ist in einem Hydraulikblock untergebracht, welcher ein Pumpengehäuse 12 bildet. Im Hydraulikblock sind weitere, nicht dargestellte Bauelemente wie Magnetventile, Hydrospeicher und Dämpfer einer hydraulischen, schlupfgeregelten Fahrzeugbremsanlage untergebracht und hydraulisch miteinander und mit der Kolbenpumpe 10 verschaltet.

Die Kolbenpumpe 10 ist in einen durchgehenden, gestuften Einbauraum 14 im Pumpengehäuse 12 eingesetzt. Der im Pumpengehäuse 12 vorgesehene Einbauraum wird vorzugsweise durch ein materialabtragendes Verfahren, z. B. durch Bohren, hergestellt. Die Kolbenpumpe 10 weist eine in den Einbauraum 14 eingesetzte Laufbuchse 16 auf, welche durch eine Preßpassung zwischen dem Außenumfang der Laufbuchse 16 und dem Innenumfang des Einbauraums 14 im Pumpengehäuse 12 abgedichtet ist. Die Laufbuchse 16 ist ein Kaltschlagteil, sie ist hohlzylindrisch ausgebildet und weist keinerlei Hinterschneidungen auf, um ihre einfache Herstellbarkeit durch Umformung zu ermöglichen. Im dargestellten Ausführungsbeispiel ist die Laufbuchse 16 ein Kaltschlagteil. Die Laufbuchse 16 ist einstückig mit einem Boden 18 versehen, welcher ein Mittelloch 20 aufweist, an dessen nach außen weisender Mündung ein konischer Ventilsitz 22 ausgebildet ist.

In der Laufbuchse 16 ist ein stiftförmiger, zylindrischer Kolben 24 aufgenommen. Der Kolben 24 ist axial verschiebblich geführt. Der Kolben 24 hat ein erstes Ende 24a, das sich innerhalb der Laufbuchse 16 befindet und ein aus der Laufbuchse 16 herausragendes zweites Ende 24b. Zur Axialführung weist die erfindungsgemäße Kolbenpumpe 10 ein Dicht- und Führungsringpaket 26 an dem aus der Laufbuchse 16 vorstehenden Ende 24b des Kolbens 24 auf, das in den Einbauraum 14 eingesetzt ist. Am anderen, in der Laufbuchse 16 befindlichen Ende 24a des Kolbens 24 ist ein weiteres Dicht- und Führungsringpaket 28 vorgesehen. Das Dicht- und Führungsringpaket 26 führt das erste Ende 24a in der Laufbuchse 16, und das Dicht- und Führungsringpaket 28 führt das zweite Ende 24b direkt im Pumpengehäuse 12.

An einer dem Boden 18 der Laufbuchse 16 zugewandeten Seite des Kolbens 24 ist eine axiale Sackbohrung 30 im Kolben 24 angebracht, deren Mündung als konischer Ventilsitz 32 ausgebildet ist. Zwei über Kreuz im Kolben 24 angebrachte Querbohrungen 34 kreuzen die Sackbohrung 30 an ihrem Grund.

Eine Zuströmung zur erfindungsgemäßen Kolbenpumpe 10 erfolgt durch einen radial in den Einbauraum 14 mündenden ersten Kanal 36 des Pumpengehäuses 12, durch den zu fördernde Flüssigkeit in den Einbauraum 14 und durch ein hohlzylindrisches Filtersieb 38, welches in Verlängerung der Laufbuchse 16 in dem Einbauraum 14 angeordnet ist, von einer offenen Stirnseite der Laufbuchse 16 her in einen Mantelraum 39 zwischen der Laufbuchse 16 und dem Kolben 24 hinein gelangt. Die Dicht- und Führungsringpakete 26 und 28 begrenzen den Mantelraum 39 in axialter Richtung. Die Zuströmung erfolgt also um einen freien Stirnrand 40 der Laufbuchse 16 herum und anschließend in axialer Richtung in diese hinein. Dadurch erübrigt sich die Anbringung einer Querbohrung in der Laufbuchse 16 als Fluideinlaß. Vom Mantelraum 39 zwischen der Laufbuchse 16 und dem Kolben 24 strömt die zu fördernde Flüssigkeit durch die Querbohrung 34 in die axiale Sackbohrung 30 des Kolbens 24.

An dem dem Boden 18 der Laufbuchse 16 zugewandten Ende 24a des Kolbens 24 ist ein Rückschlagventil als Einlaßventil 42 angebracht: Das Einlaßventil 42 weist ein topfförmiges Ventilgehäuse 44, welches als Blech- Tiefziehteil mit einem oder mehreren Durchlässen 46 hergestellt ist. Am Ventilgehäuse 44 stützt sich eine Schraubendruckfeder als Ventilschließfeder 48 ab, welche eine Ventilkugel 50 gegen den am Kolben 24 ausgebildeten Ventilsitz 32 drückt.

Eine erheblich stärker als die Ventilschließfeder 48 ausgebildete Kolbenrückstellfeder 52 stützt sich innen am Boden 18 der Laufbuchse 16 ab und drückt gegen einen mit dem Ventilgehäuse 44 einstückigen Radialflansch 54 und hält auf diese Weise das Ventilgehäuse 44 am Kolben 24 und drückt überdies den Kolben 24 in Anlage an eine Umfangsfläche eines rotierend antreibbaren Exzenters 56, welcher auf einer dem Einlaßventil 42 abgewandten Stirnseite des Endes 24b des Kolbens 24 angeordnet ist und dem Antrieb des Kolbens 24 zu einer hin- und hergehenden Hubbewegung in an sich bekannter Weise dient. Das Dicht- und Führungsringpaket 28 auf dem in der Laufbuchse 16 befindlichen Ende des Kolbens 24 ist in axialer Richtung zwischen einer Ringstufe 58 des Kolbens 24 und dem Radialflansch 54 des Ventilgehäuses 44 gehalten.

Als Auslaßventil 60 weist die erfindungsgemäße Kolbenpumpe 10 ein Rückschlagventil mit einer Ventilkugel 62 auf, welche von einer Schraubendruckfeder als Ventilschließfeder 64 gegen den Ventilsitz 22 am Boden 18 der Laufbuchse 16 gedrückt wird. Die Ventilschließfeder 64 stützt sich an einem Verschlußteil 66 ab, welches topfförmig ausgebildet und auf den Boden 18 der Laufbuchse 16 aufgepreßt ist, wobei eine Umfangswand 66a des Verschlußteils 66 den Boden 18 der Laufbuchse 16 umgreift.

Ein im Pumpengehäuse 12 vorgesehener, in den Einbauraum 14 mündender zweiter Kanal 72 leitet die zu pumpende Flüssikgeit durch das Pumpengehäuse 12 zu weiterführenden Leitungen, die der besseren Übersichtlichkeit wegen nicht dargestellt sind. Ein Strömungskanal 70 führt die Flüssigkeit vom Auslaßventil 60 zum zweiten Kanal 72. Beim bevorzugt ausgewählten Ausführungsbeispiel setzt sich der Strömungskanal 70 zusammen aus einem scheibenförmigen Zwischenraum 70a, mindestens einer axialen Nut 70b und mindestens einer radial verlaufenden Nut 70c. Bevorzugt werden drei axiale Nuten 70b und entsprechend drei radial verlaufende Nuten 70c (Fig. 2).

Am Außenumfang der Laufbuchse 16 gibt es einen radial vorstehenden, umlaufenden Vorsprung 16a (Fig. 1). Der Vorsprung 16a der Laufbuchse 16 hat einen ins Innere des Pumpengehäuses 12 gerichteten stirnseitigen Absatz 16b und einen nach außen weisenden stirnseitigen Absatz 16c. Dem stirnseitigen Absatz 16c schließt sich eine am Außenumfang der Laufbuchse 16 vorgesehene zylinderförmige Mantelfläche eines Absatzes 16e der Laufbuchse 16 an. Das Verschlußteil 66 hat einen nach innen sich öffnenden zylinderförmigen Absatz 66e. Der zylinderförmige Absatz 66e bildet die innere Mantelfläche der Umfangswand 66a. Der Einbauraum 14 hat eine abgestuft ausgeführte, zylinderartige Form mit einem stirnseitigen, nach außen weisenden Absatz 12b.

Der Außendurchmesser des zylinderförmigen Absatzes 16e der Laufbuchse 16 ist so auf den Innendurchmesser des zylinderförmigen Absatzes 66e des Verschlußteils 66 abgestimmt, daß unter Aufwendung einer gewissen, mit einem Werkzeug leicht aufbringbaren Kraft die Laufbuchse 16 und das Verschlußteil 66 zusammengesteckt werden können. Die dabei zwischen den beiden zylindrischen Absätzen 16e und 66e entstehende Pressung sorgt dafür, daß die Laufbuchse 16 und das Verschlußteil 66 fest zusammenhalten. Dadurch ist es möglich, die Laufbuchse 16, das Verschlußteil 66 und das Auslaßventil 60 außerhalb des Pumpengehäuses 12 zusammenzubauen, ohne daß befürchtet werden muß, daß diese Teile während ihres Einbaus in das Pumpengehäuse 12 auseinanderfallen. Dadurch wird der Zusammenbau der Kolbenpumpe 10 insgesamt wesentlich erleichtert.

An der Umfangswand 66a des Verschlußteils 66 gibt es eine nach innen, d. h. in Richtung des Exzenters 56, weisende, radial verlaufende, stirnseitige Fläche eines Absatzes 66c. Die Laufbuchse 16 und das Verschlußteil 66 können so weit zusammengesteckt werden, bis der stirnseitige Absatz 66c des Verschlußteils 66 an dem stirnseitigen Absatz 16c der Laufbuchse 16 zur Anlage kommt.

Die die Laufbuchse 16, das Verschlußteil 66 und das Auslaßventil 60 umfassende Vormontagebaugruppe wird vormontiert in den Einbauraum 14 eingesetzt, bis der Absatz 16b der Laufbuchse 16 an dem Absatz 12b des Pumpengehäuses 12 zur Anlage kommt.

In axialer Richtung betrachtet, ist der zylinderförmige Absatz 16e der Laufbuchse 16 kürzer als der zylinderförmige Absatz 66e des Verschlußteils 66. Dadurch entsteht zwischen der in Richtung Außen weisenden Stirnseite des Bodens 18 der Laufbuchse 16 und einer gegenüberliegenden stirnseitigen vertieften Fläche des Verschlußteils 66 der bereits erwähnte scheibenförmige Zwischenraum 70a des Strömungskanals 70.

An dem stirnseitigen Absatz 66c sind, wie die Figur 2 zeigt, drei radial verlaufende Vertiefungen vorgesehen, die die bereits erwähnten radial verlaufenden Nuten 70c des Strömungskanal 70 bilden.

Winkelmäßig korrespondierend mit den Nuten 70c sind in dem zylinderförmigen Absatz 66e des Verschlußteils 66, stirnseitig betrachtet, mondsichelförmige Vertiefungen vorgesehen. Diese Vertiefungen bilden die bereits erwähnten axialen Nuten 70b. Die Nuten 70b haben, in axialer Richtung betrachtet, überall die gleiche radiale Tiefe.

Der vorgeschlagene Verlauf des Strömungskanals 70 zwischen der Laufbuchse 16 und dem Verschlußteil 66 hat den Vorteil, daß weder in der Laufbuchse 16 noch in dem Verschlußteil 66 eine radiale Bohrung angebracht werden muß. Eine derartige Bohrung wäre fertigungstechnisch problematisch und würde einen erhöhten Fertigungsaufwand bedeuten. Dadurch, daß die Laufbuchse 16 bzw. das Verschlußteil 66 vorzugsweise als Umformteil, insbesondere als Kaltschlagteil hergestellt ist, ist es leicht möglich, stirnseitig in diese Teile Vertiefungen anzubringen, so daß dadurch ohne merkbaren Mehraufwand der Strömungskanal 70 hergestellt werden kann. Weil mindestens die Laufbuchse 16 und/oder das Verschlußteil 66 durch plastisches Umformen, vorzugsweise durch Kaltschlagen, hergestellt wird, kann der Strömungskanal 70 in einem Arbeitsschritt zusammen mit der Laufbuchse 16 bzw. zusammen mit dem Verschlußteil 66 hergestellt werden.

Nach gemeinsamen Einbau des Verschlußteils 66 zusammen mit der Laufbuchse 16 in den Einbauraum 14 wird das Pumpengehäuse 12 im Bereich des den Einbauraum 14 umgebenden Rands plastisch verformt, so daß eine Verstemmung 74 entsteht, die das Verschlußteil 66 und die Laufbuchse 16 sicher im Einbauraum 14 festhält. Druch die Verstemmung 74 entsteht auch eine Abdichtung zwischen dem Verschlußteil 66 und dem Pumpengehäuse 12, so daß die Flüssigkeit nicht aus dem Einbauraum 14 nach außen dringen kann. Zudem gleicht die Verstemmung 74 einen eventuellen Radialversatz des Verschlußteils 66 in Bezug auf den Einbauraum 14 aus, der durch das radial unverschiebliche Aufpressen des Verschlußteils 66 auf die Laufbuchse 16 und das Einpressen der Laufbuchse 16 in den Einbauraum 14 bedingt sein kann.

Für eine hohe Verschleißfestigkeit ist die Laufbuchse 16 gehärtet. Vorzugsweise erfolgt das Härten im Nitrierverfahren, das ein verzugsfreies Härten möglich macht.

Bei dem für die Beschreibung und die Zeichnung bevorzugt ausgewählten Ausführungsbeispiel sind das Einlaßventil 42 und das Auslaßventil 60 so angeordnet, daß die Flüssigkeit von der Kolbenpumpe 10 aus dem ersten Kanal 36 in den zweiten Kanal 72 gefördert wird. Es sei ergänzend noch erwähnt, daß die Ventile 42 und 60 auch so angeordnet werden können, daß die Kolbenpumpe 10 in umgekehrter Richtung durchströmt wird, d. h. daß die Kolbenpumpe 10 die Flüssigkeit aus dem Kanal 72 ansaugt und dann in den Kanal 36 fördert. Bei dieser Abwandlung der Kolbenpumpe 10 sind die Einlaß- und Auslaßventile gegenseitig vertauscht und der Strömungskanal 70 befindet sich saugseitig vor dem Einlaßventil der Kolbenpumpe.

## Patentansprüche

1. Kolbenpumpe mit einem zu einer hin- und hergehenden Hubbewegung antreibbaren Kolben, der in einer Laufbuchse axial verschieblich aufgenommen ist, die in einen Einbauraum eines Pumpengehäuses eingesetzt ist, **dadurch gekennzeichnet, dass** die Laufbuchse (16) allein durch Umformung hergestellt ist.

2. Kolbenpumpe nach Anspruch 1, **dadurch gekennzeichnet, daß** die Laufbuchse (16) ein Kaltumformteil, insbesondere ein Kaltschlagteil ist.

3. Kolbenpumpe nach Anspruch 1, **dadurch gekennzeichnet, daß** die Laufbuchse (16) gehärtet, insbesondere nitriergehärtet ist.

4. Kolbenpumpe nach Anspruch 1, **dadurch gekennzeichnet, daß** die Laufbuchse (16) einen mit ihr einstückigen Boden (18) aufweist.

5. Kolbenpumpe nach Anspruch 4, **dadurch gekennzeichnet, daß** der Boden (18) der Laufbuchse (16) ein Durchgangsloch (20) und einen Ventilsitz (22) aufweist.

6. Kolbenpumpe mit einem zu einer hin- und hergehenden Hubbewegung antreibbaren Kolben, der in einer Laufbuchse axial verschieblich aufgenommen ist, die in einen Einbauraum eines Pumpengehäuses eingesetzt ist und mit einem Verschlussteil, welches den Einbauraum abdichtend in das Pumpengehäuse eingesetzt ist,
**dadurch gekennzeichnet, dass** das Verschlussteil (66) und die Laufbuchse (16)
zwei separate, fest miteinander verbindbare Bauteile sind und dass das Verschlussteil (66) durch Verstemmen (74) in dem Einbauraum (14) gehalten und abgedichtet ist.

7. Kolbenpumpe nach Anspruch 6, **dadurch gekennzeichnet, daß** das Verschlußteil (66) durch eine Preßpassung mit der Laufbuchse (16) verbunden ist.

8. Kolbenpumpe nach Anspruch 6, **dadurch gekennzeichnet, daß** das Verschlußteil (66) ein Umformteil, insbesondere ein Kaltumformteil, insbesondere ein Kaltschlagteil ist.

9. Kolbenpumpe nach Anspruch 6, **dadurch gekennzeichnet, daß** die Kolbenpumpe (10) einen Strömungskanal (70) zwischen dem Verschlußteil (66) und der Laufbuchse (16) aufweist, der von einer Nut im Verschlußteil (66) und/oder in der Laufbuchse (16) gebildet ist.

## Claims

1. Piston pump, with a piston which is capable of being driven in a to and fro lifting movement and is received axially displaceably in a liner which is inserted into an installation space of a pump casing, **characterized in that** the liner (16) is produced solely by forming.

2. Piston pump according to Claim 1, **characterized in that** the liner (16) is a cold-formed part, in particular a cold-impacted part.

3. Piston pump according to Claim 1, **characterized in that** the liner (16) is hardened, in particular nitride-hardened.

4. Piston pump according to Claim 1, **characterized in that** the liner (16) has a bottom (18) in one piece with it.

5. Piston pump according to Claim 4, **characterized in that** the bottom (18) of the liner (16) has a passage hole (20) and a valve seat (22).

6. Piston pump, with a piston which is capable of being driven in a to and fro lifting movement and is received axially displaceably in a liner which is inserted into an installation space of a pump casing, and with a closing part which is inserted into the pump casing so as to seal off the installation space, **characterized in that** the closing part (66) and the liner (16) are two separate components firmly connectable to one another, and **in that** the closing part (66) is held and sealed off in the installation space (14) by caulking (74).

7. Piston pump according to Claim 6, **characterized in that** the closing part (66) is connected to the liner (16) by means of a press fit.

8. Piston pump according to Claim 6, **characterized in that** the closing part (66) is a formed part, in particular a cold-formed part, in particular a cold-impacted part.

9. Piston pump according to Claim 6, **characterized in that** the piston pump (10) has a flow duct (70) between the closing part (66) and the liner (16), the said flow duct being formed by a groove in the closing part (66) and/or in the liner (16).

## Revendications

1. Pompe à piston comportant un piston entraîné suivant une course alternative, le piston coulissant axialement dans une chemise placée dans un volume de montage (14) d'un corps de pompe (12),
**caractérisé en ce que**
la chemise (16) est réalisée seule par une opération de mise en forme.

2. Pompe à piston selon la revendication 1,
**caractérisée en ce que**
la chemise (16) est une pièce mise en forme à froid, notamment une pièce formée à froid.

3. Pompe à piston selon la revendication 1,
**caractérisée en ce que**
la chemise (16) a subi un traitement thermique, notamment un traitement de nitruration.

4. Pompe à piston selon la revendication 1,
**caractérisée en ce que**
la chemise (16) comporte un fond (18) faisant corps avec elle.

5. Pompe à piston selon la revendication 4,
**caractérisée en ce que**
le fond (18) de la chemise (16) comporte un orifice traversant (20) et un siège de soupape (22).

6. Pompe à piston comportant un piston entraîné suivant une course alternative, ce piston coulissant axialement dans une chemise placée dans le volume de montage d'un corps de pompe et une pièce de fermeture placée dans le corps de pompe pour rendre étanche le volume de montage,
**caractérisée en ce que**
la pièce de fermeture (66) et la chemise (16) sont deux pièces distinctes reliées solidairement l'une à l'autre et la pièce de fermeture (66) est tenue de manière étanche dans le volume de montage (14) par un matage (74).

7. Pompe à piston selon la revendication 6.
**caractérisée en ce que**
la pièce de fermeture (66) est reliée par un ajustage pressé à la chemise (16).

8. Pompe à piston selon la revendication 6,
**caractérisée en ce que**
la pièce de fermeture (66) est une pièce mise en forme, notamment à froid, et en particulier une pièce forgée à froid.

9. Pompe à piston selon la revendication 6,
**caractérisée en ce qu'**
elle (10) comporte un canal d'écoulement (70) entre la pièce de fermeture (66) et la chemise (16), ce canal étant formé par une rainure dans la pièce de fermeture (66) et/ou dans la chemise (16).
